# NOUVEAU FASCICULE DE BREVET EUROPEEN

(11) **EP 1 884 847 B2**
(45) Date de publication et mention de la décision concernant l'opposition: **03.05.2017**
(45) Mention de la délivrance du brevet: 15.12.2010
(21) Numéro de dépôt: 07290916.1
(22) Date de dépôt: 20.07.2007
(51) Int. Cl.: G05B 19/042, G05B 1/01, E05B 47/00, G07C 9/00

(54) **Organe de commande électronique avec identification de l'utilisateur**
Elektronisches Steuergerät mit Benutzeridentifizierung
Electronical control unit with user identification

(30) Priorité: 24.07.2006 FR 0606762
(43) Date de publication de la demande: 06.02.2008
(73) Titulaire: RIFL S.A., 92398 Villeneuve la Garenne Cedex (FR)
(72) Inventeur: Ben Bouazza, Jamal, 92390 Villeneuve la Garenne (FR)
(74) Mandataire: den Braber, Gerard Paul

(56) Documents cités:
- EP-A- 1 031 953
- EP-A2- 1 306 816
- WO-A-03/034365
- WO-A-03/069566
- WO-A1-2005/018137
- FR-A1- 2 841 016
- US-A- 6 005 306

## Description

La présente invention concerne des organes de commande du type utilisé pour les pupitres de commande industriels, tels des boutons poussoirs, des commutateurs, des sélecteurs, des rotacteurs.

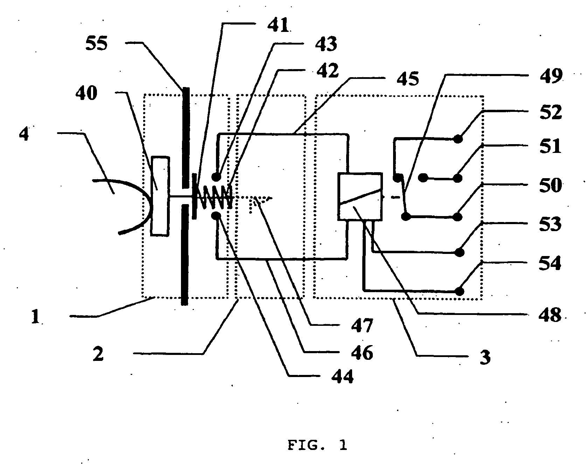

Un organe de commande présente deux positions de sortie TRAVAIL et REPOS, en fonction des manoeuvres effectuées par un opérateur sur un moyen de manoeuvre dudit organe. Un organe de commande, tel que représenté à la figure 1 comprend un moyen de manoeuvre 1, un moyen de traitement 2 et un moyen de relais 3. Le moyen de manoeuvre 1 est manoeuvrable par un opérateur 4. Ce moyen de manoeuvre 1 comprend un élément de manoeuvre 40 qui peut être un bouton à pousser ou à tirer, un bouton à tourner, un levier, une pédale, ou tout autre élément de manoeuvre mobilisable entre au moins deux positions de manoeuvre. La position de manoeuvre ainsi obtenue est communiquée à un moyen de traitement 2 qui détermine une position de sortie en fonction du mode. Un mode monostable et un mode bistable sont deux modes principaux.

Dans le mode bistable, chaque manoeuvre du moyen de manoeuvre 1 modifie la position de sortie de l'organe de commande. Ainsi pour un bouton à tourner (rotacteur) à deux positions stables, chaque position de manoeuvre est traitée par le moyen de traitement 2 pour qu'une position de sortie soit associée à chacune des positions de manoeuvre. Pour un bouton poussoir rappelé à une position, une première manoeuvre produit un changement de position de sortie, par exemple de REPOS à TRAVAIL, tandis qu'une seconde manoeuvre produit un changement de position de sortie inverse, soit de TRAVAIL à REPOS.

Dans le mode monostable, le moyen de manoeuvre 1 présente une position de manoeuvre stable rappelée par un moyen de rappel 42 et une position de manoeuvre instable atteignable en agissant contre ledit moyen de rappel 42. Dans la position de manoeuvre stable le moyen de traitement 2 transmet une première position de sortie. Tant qu'une manoeuvre est appliquée au moyen de manoeuvre 1 le maintenant dans la position de manoeuvre instable en agissant contre le moyen de rappel 42, le moyen de traitement 2 transmet une seconde position de sortie. Dès que la manoeuvre cesse, le moyen de manoeuvre 1 est rappelé dans sa position stable et le moyen de traitement 2 transmet la première position de sortie.

Selon les cas, le moyen de traitement 2, généralement mécanique ou électromécanique, réalise une fonction mémoire, une fonction de rappel en position, une fonction d'inversion ou une simple fonction de transmission vers le moyen de relais 3.

Le moyen de relais 3 est un étage d'interface électrique réalisant une mise en forme de la position de sortie de l'organe de commande utilisable par exemple pour la commande d'un organe récepteur.

De tels organes de commande sont bien connus de l'homme du métier qui dispose de nombreux modèles correspondant aux différents modes, aux différents types d'élément de manoeuvre (poussoir, bascule, rotacteur, levier, etc.) ou encore aux différents standards de format d'interface mécanique et/ou électrique.

Un premier inconvénient de ces organes de commande selon l'art antérieur est la multiplicité des modèles en fonction des différents modes. Cette multiplicité entraîne une gestion complexe de ces organes.

Un autre inconvénient est que, les différentes fonctions (poussoir, bascule, rotacteur, levier, etc.) sont obtenues par des réalisations mécaniques des moyens de manoeuvres 1 et de traitement 2. Les positions REPOS et TRAVAIL résultent de mouvements mécaniques du moyen de manoeuvre, solution interdisant l'interchangeabilité d'un organe de commande monostable par un organe bistable.

Un autre inconvénient est qu'un tel organe de commande est manoeuvrable par toute personne. Il est connu de sécuriser un organe de commande par l'utilisation d'une serrure mécanique à clé verrouillant le moyen de manoeuvre 1. Une telle solution n'est pas satisfaisante et présente plusieurs inconvénients connus : surcoût de la serrure/clé, difficulté pour assurer l'unicité des clés afin d'éviter une interopérabilité non souhaitée, problèmes en cas de perte ou de vol d'une clé, possibilité de duplication d'une clé.

La demande de brevet internationale publiée sous le numéro WO 03/069566 décrit un système de casiers qui sont électroniquement contrôlés. Le système utilise un traitement distribué pour contrôler l'accès et l'affectation d'une pluralité de casiers dans une école, un lieu de travail, un centre de sports, etc. Le système comprend une station de travail administrateur.

La présente invention propose une solution ingénieuse qui remédie aux différents inconvénients décrits dans ce qui précède.

L'invention a pour objet un organe de commande telle que définie à la revendication 1. L'invention à également pour objet un procédé de configuration d'un tel organe de commande, ce procédé étant défini à la revendication 8. Les revendications dépendantes définissent des caractéristiques supplémentaires permettant des implémentations avantageuses.

Un avantage de l'invention est de permettre de sécuriser l'utilisation d'un organe de commande, tout en offrant la possibilité d'utiliser un seul organe de commande pour réaliser les différents modes de fonctionnement grâce à l'unité de commande programmable.

Un avantage des caractéristiques supplémentaires définies à la revendication 3 est de permettre une mémorisation et un suivi des utilisations permettant d'offrir une traçabilité de ces utilisations.

Un avantage des caractéristiques supplémentaires définies à la revendication 4 est de pouvoir horodater les évènements dudit journal de bord ou encore de permettre une gestion des utilisations en fonction de l'heure.

Un avantage des caractéristiques supplémentaires définies à la revendication 16 est que l'organe de commande peut être configuré in situ sans nécessiter de terminal ou station de programmation.

D'autres caractéristiques, détails et avantages de l'invention ressortiront plus clairement de la description détaillée donnée ci-après à titre indicatif en relation avec des dessins sur lesquels :
- la figure 1 déjà partiellement décrite montre un organe de commande selon l'état de l'art,
- la figure 2 montre comparativement un organe de commande selon l'invention,
- la figure 3 montre une variante d'un organe de commande selon l'invention,
- la figure 4 présente en détail un organe de commande selon l'invention,
- la figure 5 montre un schéma d'organisation d'une mémoire non volatile d'un organe de commande selon l'invention,
- la figure 6 représente un diagramme d'état de l'organe de commande selon l'invention.

En se référant toujours à la figure 1, une manoeuvre d'un opérateur 4 (ici figuré par son doigt) sur un élément de manoeuvre 40 mobilise un contacteur 41 solidaire de manière à ce que ce dernier vienne réaliser un contact électrique entre deux points de contact 43, 44, fermant ainsi un circuit comprenant des conducteurs 45, 46, afin de commander une bobine 48 d'un relais. Cette manoeuvre s'effectue en s'opposant au moyen de rappel 42. Dans le cas d'un organe monostable tel que représenté en principal, le contact est établi, tant que l'opérateur 4 maintient sa manoeuvre. Lorsque la manoeuvre est relâchée, l'élément de manoeuvre 40, sous l'action du moyen de rappel 42 revient à sa position de manoeuvre de repos (tel que représenté), entraînant le contacteur 41 qui ne réalise alors plus le contact. Dans ce premier exemple, figurant un organe monostable, le moyen de traitement 2 se réduit auxdits conducteurs 45, 46 et réalise une simple transmission entre le moyen de manoeuvre 1 et le moyen de relais 3.

Dans le cas d'un organe bistable, un dispositif de verrouillage additionnel 47, figuré secondairement en pointillé, réalise une fonction mémoire de la position de manoeuvre de l'élément de manoeuvre 40 de la manière suivante : une première manoeuvre sur l'élément de manoeuvre 40 provoque un verrouillage du dispositif de verrouillage 47 qui maintient l'élément de manoeuvre 40 enfoncé, le contacteur 41 reliant électriquement les deux points de contact 43, 44. Une seconde manoeuvre ultérieure sur l'élément de manoeuvre 40 provoque un déverrouillage du dispositif de verrouillage 47 qui libère l'élément de manoeuvre 40. Ce dernier revient à sa position de manoeuvre de repos (tel que représenté), entraînant le contacteur 41 qui ne réalise alors plus le contact. Dans ce second exemple correspondant à un organe bistable, le moyen de traitement 2 comprend les conducteurs 45, 46 ainsi que le dispositif de verrouillage 47 et réalise une fonction de mémorisation et une fonction de transmission entre le moyen de manoeuvre 1 et le moyen de relais 3.

La fermeture du circuit comprenant les conducteurs 45, 46 par le contacteur 41 venant relier les deux points de contact 43, 44 commande la bobine de relais 48. Cette dernière lorsqu'elle est alimentée via les points 53, 54 commande un interrupteur 49. Un câblage classique d'un organe de commande présente en sortie un contact commun 50, un contact repos 52 et un contact travail 51. Lorsque le contacteur 41 ne relie pas les points 42, 43, la bobine 48 n'est pas excitée et l'interrupteur 49 est dans une position de sortie REPOS (tel que représenté sur la figure) où le contact commun 50 est relié avec le contact repos 52. Lorsque le contacteur 41 relie les points 42, 43, la bobine 48 est excitée et l'interrupteur 49 est dans une position de sortie TRAVAIL où le contact commun 50 est relié avec le contact travail 51.

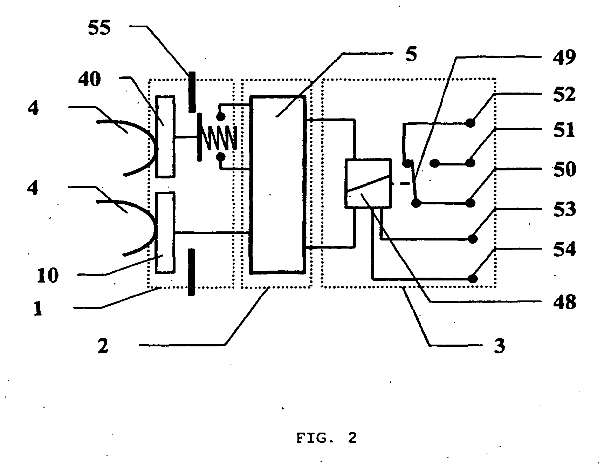

La figure 2 montre un organe de commande intelligent selon l'invention. Un tel organe de commande comprend un moyen de relais 3 identique à ceux d'un organe de l'art antérieur tel que décrit précédemment. L'organe de commande intelligent se caractérise d'une part, par le remplacement du moyen de traitement 2 par une unité de commande programmable 5 et, d'autre part, en ce qu'il comprend un moyen d'acquisition 10, situé au niveau du moyen de manoeuvre 1, apte à fournir à l'unité de commande 5 une donnée d'identification d'un opérateur 4. L'unité de commande 5 est avantageusement une unité à base de microcontrôleur 63 ou de microprocesseur. Cette unité de commande 5 est interfacée avec le moyen de manoeuvre 1 par exemple au moyen d'une entrée de l'unité de commande 5 capable de détecter la fermeture du circuit par le contacteur 41. Le moyen de manoeuvre est avantageusement monostable en ce qu'il ne comporte aucune fonction de mémorisation afin que l'entrée de l'unité de commande 5, détectant la fermeture du contact par le contacteur 41, reflète fidèlement la position de manoeuvre par l'opérateur 4 de l'élément de manoeuvre 40. L'unité de commande 5 est interfacée avec le moyen de relais 3 par une sortie de l'unité de commande 5 pouvant réaliser la fermeture ou l'ouverture du contact entre les deux conducteurs 45, 46 afin d'exciter ou non la bobine 48 du relais.

Le fonctionnement de l'unité de commande 5 est défini par un programme 6. Ce programme permet de définir un comportement de l'organe de commande en ce que la position de sortie REPOS ou TRAVAIL est une fonction de l'entrée de manoeuvre MANOEUVRE ou NON MANOEUVRE et le cas échéant du temps. Un premier exemple de programme 6 permet à l'organe de commande de se comporter comme un monostable. Dans ce cas, l'unité de commande 5 se contente de "recopier" l'entrée sur la sortie, une MANOEUVRE (respectivement NON MANOEUVRE) en entrée se traduisant immédiatement par une position de sortie TRAVAIL (respectivement REPOS). Un deuxième exemple de programme 6 permet à l'organe de commande de se comporter comme un bistable. Dans ce cas, l'unité de commande réalise une fonction mémoire, à l'instar du dispositif de verrouillage 47. La sortie est en permanence maintenue à sa position. Sur détection d'une nouvelle manoeuvre ou plus précisément d'un front montant (passage de NON MANOEUVRE à MANOEUVRE) en entrée, la position de sortie est modifiée. Elle devient REPOS, si elle était précédemment TRAVAIL et TRAVAIL si elle était REPOS. De tels programmes 6, ne sont pas détaillés ici. Ils sont simples et l'homme du métier sait les réaliser.

Un avantage de l'invention conférée par l'utilisation d'une unité de commande programmable apparaît ici en ce que ledit programme 6 n'est pas limité à la simple reproduction des modes bistable ou monostable. Il est avantageusement possible de réaliser d'autres modes, la sortie pouvant être calculée en fonction de l'entrée, de la sortie, du temps, des valeurs passées de l'entrée ou de la sortie ou encore de valeurs issues d'un autre capteur selon une fonction de calcul quelconque. Ainsi il est possible de simplement ajouter un inverseur, l'organe de commande se comportant alors comme si les contacts repos et travail étaient inversés, sans nécessiter de modification physique du câblage. L'utilisation de temporisations appliquées lors d'un changement de position de sortie entre REPOS vers TRAVAIL ou entre TRAVAIL vers REPOS permet encore de réaliser des modes nouveaux. Ainsi un monostable temporisé se comporte comme un monostable, la position de sortie étant cependant maintenue durant une temporisation après la disparition de la manoeuvre. A titre d'exemple ladite temporisation peut être constante, ce qui est réalisable en technologie électromécanique, ou encore égale à une fonction de la durée de la manoeuvre précédente. Comme l'homme du métier peut le comprendre, les possibilités sont illimitées et présentent une réelle avancée relativement à l'art antérieur.

Les modes étant choisis et définis par le programme 6 de l'unité de commande 5, un sélecteur 7 permet avantageusement de déterminer le mode actif. Le programme 6 comprend différentes branches correspondant chacune à un mode, ledit sélecteur 7 déterminant la branche active.

Avantageusement, afin de ne pas devoir modifier le programme 6, le sélecteur 7 est extérieur à l'unité de commande 5 et est réalisé mécaniquement par un organe 8. Cet organe ou mini organe 8 est avantageusement de dimensions réduites afin de s'intégrer à l'organe de commande. Ce mini organe 8 est interfacé à une entrée de l'unité de commande 5 qui acquiert sa valeur au cours du déroulement du programme 6. Ce mini organe 8 peut être un mini interrupteur dont chaque position détermine un mode, un mini bouton poussoir dont chaque appui est interprété par le programme 6 comme un passage au mode suivant cycliquement. Ce mini organe 8 peut encore être réduit à un élément classiquement utilisé pour configurer un composant électronique tel un cavalier ou une soudure.

Alternativement, ledit sélecteur 7 est une valeur dans une mémoire 9 lue par le programme 6. Cette valeur est avantageusement située dans une mémoire non volatile 65. A noter que cette mémoire 9 peut être modifiée par tout moyens d'accès à ladite mémoire : moyen de programmation extérieur via une liaison de données 67 ou encore via le programme 6 lui-même.

Selon un mode de réalisation particulièrement avantageux, l'organe de commande comprend encore une base de données 12 pouvant stocker des données d'identification 25, 26, 27. L'unité de commande 5 compare une donnée d'identification fournie par le moyen d'acquisition 10 avec des données d'identification utilisateur 27 préalablement stockées dans la base de données 12. Si la donnée d'identification d'un opérateur 4 correspond à une donnée d'identification utilisateur 27 qui est présente dans la base de données 12, ledit opérateur 4 est reconnu comme un utilisateur et une autorisation est accordée. Parallèlement, l'unité de commande 5 ne transmet un changement de la position de sortie au moyen de relais 3 qu'en cas d'autorisation.

Avantageusement, afin de sécuriser l'utilisation de l'organe de commande en limitant sa manoeuvre à des utilisateurs dûment reconnus et autorisés le moyen d'acquisition 10 est un capteur biométrique. Un tel capteur fourni une donnée d'identification comprenant une "signature" d'une caractéristique individuelle identifiant de manière unique un opérateur 4. Il peut s'agir de toute donnée biométrique. On cite à titre d'exemple capteur d'empreinte digitale, capteur d'empreinte rétinienne, capteur d'empreinte iridienne ou encore capteur d'empreinte faciale. Le support de la donnée d'identification est ainsi une partie du corps de l'opérateur 4.

Alternativement ou complémentairement au capteur précédent, afin de sécuriser l'utilisation en limitant la manoeuvre à des utilisateurs porteurs d'un support d'identification, le moyen d'acquisition 10 est un lecteur sans contact, qui permet de lire une donnée d'identification portée par ledit support. Ainsi peut être utilisé un lecteur d'identification radio fréquence (RFID) ou un lecteur de code à barre. Un opérateur 4 est réputé autorisé lorsqu'il est porteur d'un badge support d'un moyen RFID ou d'un code barre lisible par ledit lecteur/capteur. Le lecteur/capteur acquiert alors ladite donnée d'identification radio fréquence ou ledit code barre figurant sur le badge support lorsque ledit badge est dans la portée du lecteur/capteur et le transmet à l'unité de commande 5.

Selon un premier mode de réalisation, le moyen d'acquisition 10 fournit une donnée d'identification de l'opérateur 4 qui permet de déterminer une autorisation. Une manoeuvre de l'opérateur 4 sur un élément de manoeuvre 40 distinct n'est effectivement transmise par l'unité de commande 5 au moyen de relais 3 que si ledit opérateur 4 reçoit une autorisation. Autrement dit, l'unité de commande 5 réalise un ET logique entre la manoeuvre de l'élément de manoeuvre 40 et l'autorisation.

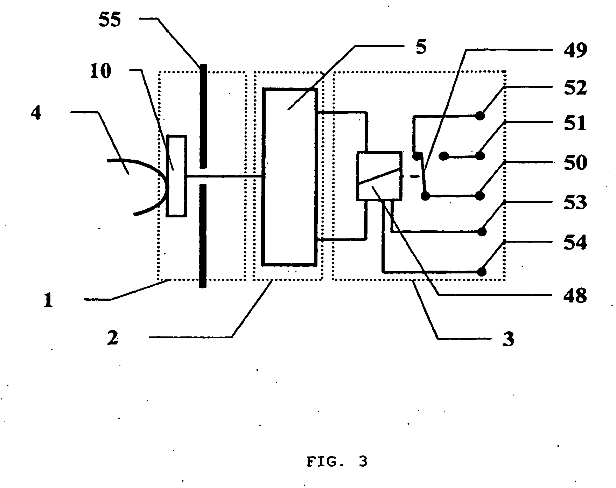

Selon un second mode de réalisation avantageux, illustré à la figure 3, le moyen d'acquisition 10 est utilisé comme moyen de manoeuvre 1. L'unité de commande 5 interface uniquement le moyen d'acquisition 10. L'entrée du support d'identification, soit le badge dans le cas d'un lecteur sans contact ou l'opérateur 4 lui-même pour un capteur biométrique (ou plus précisément son doigt, rétine, iris, face ...) dans la portée dudit moyen d'acquisition 10 déclenche l'acquisition d'une donnée d'identification. Cette donnée d'identification est comparée avec les données d'identification utilisateur 27 stockées dans la base de données 12 pour fournir le cas échéant une reconnaissance/autorisation. L'unité de commande 5 traite ce signal d'autorisation en remplacement de l'entrée de manoeuvre manuelle. Une donnée d'identification reconnue réalise ainsi deux fonctions : une reconnaissance de l'opérateur 4 et une manoeuvre manuelle en entrée de l'organe de commande. Ainsi pour un mode monostable, la présence d'un support autorisé dans la portée du moyen d'acquisition 10 est reconnue et produit une autorisation. De plus cette présence est considérée comme une manoeuvre. Tant que cette manoeuvre/présence est maintenue, la position de sortie est TRAVAIL. La sortie dudit support de la portée du moyen d'acquisition 10 provoque un retour à la position de sortie REPOS.

Un autre avantage d'une unité de commande programmable 5 est qu'elle dispose et peut gérer de la mémoire. Il est ainsi possible de tracer les événements tels que les identifications, les reconnaissances réussies ou échouées, les manoeuvres manuelles ou encore les positions de sortie. Un journal de bord peut ainsi être cycliquement enregistré dans une mémoire 15 apte à stocker ces événements. Ceci confère encore un avantage en ce que l'invention offre une traçabilité des événements.

Les événements peuvent être stockés séquentiellement dans l'ordre de leur occurrence. Une information plus riche est obtenue si chaque événement est horodaté. A cette fin, l'organe de commande comprend encore une horloge afin de dater les événements du journal de bord 15.

Cette horloge fournit encore un temps absolu. En combinaison avec les données d'identification, il est possible de définir et stocker des plages horaires d'utilisation pour chaque utilisateur. Le programme ajoute alors une condition horaire avant d'autoriser une transmission d'un changement de position de sortie en vérifiant en outre que l'instant d'acquisition d'une donnée d'identification d'un utilisateur est bien compris dans la plage horaire affectée audit utilisateur où ce dernier est autorisé à utiliser l'organe de commande.

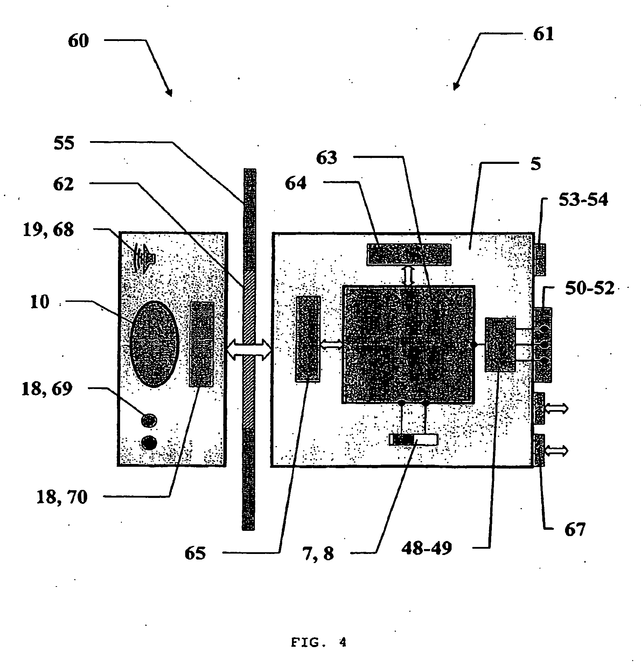

En se référant à la figure 4, l'organe de commande comprend avantageusement, relativement à un panneau 55 percé d'un passage 62, une partie avant 60 visible de l'opérateur 4 et comprenant au moins le moyen d'acquisition 10 et l'élément de manoeuvre 40 nécessaires lors de l'utilisation de l'organe de commande. Dans une partie arrière 61 sont regroupés les autres composants qui n'ont pas à être accédé ou seulement durant des phases de maintenance ou de configuration. Ainsi un mini organe 8 utilisé comme sélecteur 7 de mode en configuration est avantageusement placé en partie arrière, organisée autour de l'unité de commande 5. L'organe de commande comprend optionnellement des moyens de signalisation visuels 18 et/ou sonores 19. Ces moyens 18, 19 sont disposés en partie avant ou arrière selon que leur utilisation est prévue par/pour un utilisateur ou un par/pour un administrateur. Les moyens sonores 19 sont typiquement un bruiteur 68. Les moyens visuels peuvent être du type diode électroluminescente (LED) 69 ou encore du type écran à cristaux liquide (LCD) 70.

On verra dans la suite que l'organe de commande selon l'invention est prévu pour être avantageusement configuré sans nécessiter de recours à des moyens de programmation classique. Le programme 6 peut être chargé une fois pour toute en usine. Cependant une liaison de donnée 67 permettant d'accéder à la mémoire 64, 65 de l'unité de commande 5 peut avantageusement être comprise. Il peut s'agir d'une liaison filaire de type USB ou RS232/RS485 ou encore d'une liaison sans fil. Une telle liaison permet d'accéder à la mémoire vive 64, ou non volatile 65, de l'unité de commande 5, afin d'y lire ou d'y écrire. Selon la structure de ladite mémoire 64, 65, décrite plus loin, il est ainsi possible de modifier un paramètre de configuration tel le sélecteur 7 en modifiant la zone correspondante 9 ou encore le programme 6 lui-même.

Les organes de commandes existants respectent des standards de forme et de dimension ainsi que d'interface électrique. Ainsi une famille d'organe de commande pouvant être montés sur un panneau 55 présente un boîtier externe de dimensions données permettant par exemple un montage dans un panneau 55 au moyen d'un perçage 62 d'un diamètre donné (diamètres standards utilisés en industrie : 22.3mm, 30mm, 45mm, 50mm, 70mm, ...). De même, en termes d'interface électrique, ces organes vont tous présenter la même interface. Selon l'exemple décrit précédemment, l'organe présente trois contacts 50-52 pour le moyen de relais 3 en sortie du bloc bobine/interrupteur 48-49, et des contacts d'alimentation 53-54. Cette alimentation est définie généralement en 24V. Afin de pouvoir remplacer les organes existants mécaniquement et électriquement, l'organe selon l'invention présente avantageusement un boîtier externe et des connexions électriques externes 50-54 conformes aux standards des organes de commande industriels. L'électronique de l'unité de commande 5 étant classiquement alimentée en +5V, l'organe de commande comprend avantageusement une alimentation (non représentée) capable de produire cette tension à partir de l'alimentation reçue 53-54. Avantageusement selon l'invention, un changement de mode modifie la configuration de l'unité de commande 5. Tout changement de configuration ou même du logiciel 6 reste sans impact sur l'encombrement ou les interfaces mécaniques et électriques de l'organe de commande selon l'invention.

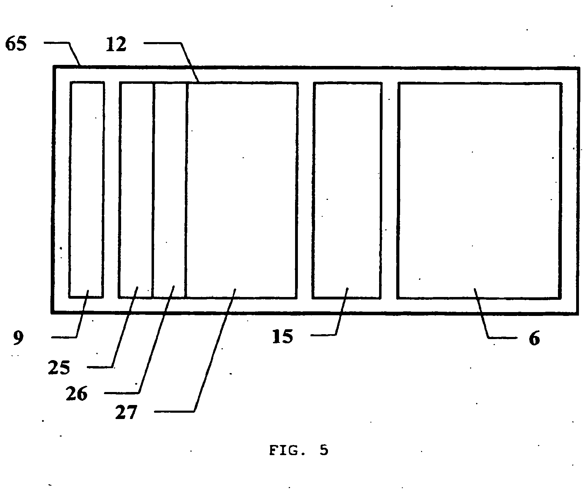

Selon la figure 4, l'unité de commande 5 dispose d'une mémoire vive 64 et d'une mémoire non volatile 65. En se référant maintenant à la figure 5, cette mémoire non volatile 65 est organisée pour contenir une mémoire 9 sélecteur de mode déjà décrite, une base de données d'identification 12 comprenant les données d'identification autorisées et éventuellement les plages horaires d'utilisation associées. Parmi les opérateurs 4 susceptibles d'utiliser l'organe de commande selon l'invention, ceux dont les données d'identification sont présentes dans la base de données sont dits autorisés. Les opérateurs 4 autorisés se répartissent en plusieurs rôles. Un premier rôle est celui d'utilisateur. Un utilisateur utilise l'organe de commande et peut le manoeuvrer. Les données d'identification utilisateur sont stockées dans une zone 27 de la base de données 12. Un second rôle est celui d'administrateur. Un administrateur est particularisé et est autorisé à réaliser des fonctions de configuration (ajout d'utilisateur, changement de mode,...) de l'organe de commande comme il sera décrit plus loin. Les données d'identification administrateur sont stockées dans une zone 25 de la base de données 12. Un autre rôle optionnel complémentaire est celui d'effaceur. Les données d'identification effaceur sont stockées dans une zone 26 de la base de données 12. Une zone 15 déjà décrite est dédiée au stockage cyclique d'un journal. Une autre zone 6 est dédiée au stockage du programme de l'unité de commande 5. Avantageusement, cette mémoire non volatile 65 permet de conserver les informations stockées entre deux mises sous tension.

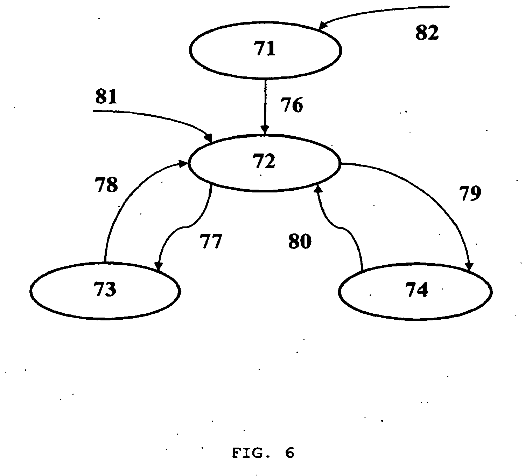

En référence à la figure 6 représentant un diagramme d'état de l'organe de commande selon l'invention, va maintenant être décrit le fonctionnement logique dudit organe. Lors de la première mise sous tension ou suite à un effacement, la base de données 12 ne contient aucune donnée d'identification administrateur 25. L'organe de commande se trouve alors dans l'état INITIALISATION 71. L'unité de commande 5 réalise une acquisition d'une donnée d'identification pour le premier opérateur 4 se présentant au moyen d'acquisition 10. Cet opérateur est considéré être un administrateur et ladite donnée d'identification est stockée dans la zone 25. L'état devient IDENTIFICATION 72 via la transition 76. L'état IDENTIFICATION 72 est l'état nominal de fonctionnement. Dans cet état est réalisée cycliquement une séquence comprenant : acquisition d'une donnée d'identification et comparaison avec les données d'identification de la base de données 12. Si une comparaison avec une donnée d'identification administrateur 25 est positive, l'état devient ENREGISTREMENT 73 via la transition 77. Si une comparaison avec une donnée d'identification utilisateur 27 est positive, l'opérateur 4 est un utilisateur autorisé et une manoeuvre qu'il effectue entraînant un changement de la position de sortie est transmise au moyen de relais 3. Si la comparaison est négative, l'opérateur 4 n'est pas autorisé et la position de sortie n'est pas modifiée.

Dans l'état ENREGISTREMENT 73 est réalisée une acquisition d'une donnée d'identification. Si cette donnée d'identification est positivement comparée avec une donnée d'identification administrateur 25 l'état (re)devient IDENTIFICATION 72 via la transition 78. Ceci permet de quitter l'état ENREGISTREMENT 73 pour revenir à l'état nominal IDENTIFICATION 72. A défaut la donnée d'identification est comparée avec les données d'identification effaceur 26. Une comparaison positive provoque un effacement de toutes les données d'identification utilisateur 27 de la base de données 12. Les données d'identification administrateur 25 et effaceur 26 ne sont pas affectées. A défaut, si les deux comparaisons précédentes ont été négatives, la donnée d'identification est comparée avec les données d'identification utilisateur 27. Une comparaison négative indique un nouvel utilisateur dont la donnée d'identification est stockée dans la zone utilisateur 27. Cette séquence est reproduite cycliquement et permet l'enregistrement de nouveaux utilisateurs.

Afin de pouvoir ajouter de nouvelles données d'identification administrateur 25 ou effaceur 26, un protocole particulier est utilisé consistant par exemple en une reconnaissance multiple d'une donnée d'identification administrateur selon un protocole temporel donné afin de passer dans un état SUPER ENREGISTREMENT 74 via une transition 79. Un exemple d'un tel protocole consiste à acquérir et à reconnaître la donnée d'identification d'un administrateur trois fois de suite avec un intervalle de temps inférieur à 10 secondes entre chaque acquisition.

Dans cet état SUPER ENREGISTREMENT 74 il est possible d'ajouter des données d'identification administrateur 25 ou effaceur 26, par exemple selon le déroulement suivant. Après l'entrée dans ledit état, on se trouve durant un premier temps limité, par exemple 5 secondes, dans un sous état AJOUT ADMINISTRATEUR. Une donnée d'identification acquise est alors réputée être celle d'un administrateur et est stockée dans la zone 25. Après enregistrement d'un administrateur ou après attente volontaire de l'écoulement du premier temps limité, on passe dans un sous état AJOUT EFFACEUR durant un second temps limité. Une donnée d'identification acquise est alors réputée être celle d'un effaceur et est stockée dans la zone 26. Après enregistrement d'un effaceur ou après attente volontaire de l'écoulement du second temps limité, on repasse automatiquement dans l'état IDENTIFICATION 72 selon la transition 80.

Afin de pouvoir supprimer les données d'identification administrateur 25 et effaceur 26, une action 82 est prévue par exemple sur le sélecteur du mode de fonctionnement 8. Afin de distinguer cette action d'un changement de mode tel que décrit précédemment et d'éviter un déclenchement non souhaité, une séquence particulière est nécessaire. Il peut s'agir d'une action plusieurs fois répétée ou encore d'une action maintenue un temps donné. A l'issue, comme décrit précédemment, l'état devient INITIALISATION 71.

Optionnellement, depuis tout état, afin de sécuriser l'emploi de l'organe de commande, il est avantageux que, passé un certain temps décompté par une temporisation, l'état passe automatiquement dans l'état IDENTIFICATION 72 par une transition 81.

Il a été décrit que le mode pouvait être déterminé par un sélecteur 7. Alternativement ou complémentairement, il est avantageux de pouvoir changer ce mode par une séquence appropriée de reconnaissances de données d'identification administrateur 25 et/ou effaceur 26. Ainsi par exemple depuis l'état IDENTIFICATION 72, l'acquisition d'une donnée d'identification d'un effaceur suivie de l'acquisition d'une donnée d'identification d'un administrateur peut réaliser une telle séquence. Suite à une telle séquence, le programme 6 modifie le mode.

Il a été montré comment toutes les fonctions nécessaires à la configuration et à l'utilisation d'un organe de commande intelligent pouvaient être réalisées, sans recourir à un moyen de programmation, mais au contraire en n'utilisant pour configurer que les moyens disponibles en utilisation, moyen d'acquisition 10, élément de manoeuvre 40, éventuellement complétés par le sélecteur 8 et en particularisant les rôles de certains opérateurs.

Cependant l'état de l'organe de commande peut être difficile à suivre lorsque le diagramme de la figure 6 se complexifie. Aussi les moyens de signalisation visuels 18 et/ou sonores 19 sont avantageusement utilisés pour indiquer aux opérateurs l'état ou le sous état, leur changement et/ou le mode de l'organe de commande.

## Revendications

1. Organe de commande apte à être monté dans les pupitres de commande industriels en remplacement d'un organe de commande ayant un moyen de manoeuvre mécanique tel que des boutons poussoirs, des commutateurs, des sélecteurs, des rotacteurs, l'organe de commande comprenant :
- un capteur d'empreinte digitale utilisé comme moyen de manoeuvre (1), de sorte qu'une reconnaissance d'une empreinte digitale remplace une manoeuvre manuelle,
- une base de données (12) pour stocker des données d'identification,
- un moyen de relais (3) par l'intermédiaire duquel l'organe de commande peut changer entre deux positions de sortie, et
- une unité de commande programmable (5) apte à comparer une donnée d'identification d'un opérateur, fournie par le capteur d'empreinte digitale, avec des données d'identification stockées dans la base de données (12) dudit organe de commande afin de reconnaître si ledit opérateur (4) est autorisé, un changement de position de sortie n'étant autorisé que si ledit opérateur (4) est reconnu autorisé,
**caractérisé en ce que** :
- l'organe de commande comprend un programme exécutable par l'unité de commande afin de déterminer une position de sortie de l'organe de commande en fonction d'une reconnaissance d'une empreinte digitale selon un mode parmi deux modes principaux : monostable ou bistable,
- l'organe de commande comprend un sélecteur (7) déterminant le mode de l'organe de commande, le sélecteur étant une valeur (9) dans une mémoire lisible par ledit programme, et
- l'organe de commande est apte à réaliser les étapes suivantes dans un état d'initialisation obtenu suite à une mise sous tension lorsqu'aucune donnée d'identification n'est stockée :
- acquisition d'une donnée d'identification à partir du capteur d'empreinte digitale,
- stockage de ladite donnée d'identification comme donnée d'identification administrateur (25), un administrateur étant autorisé à réaliser des fonctions de configuration de l'organe de commande, et
- passage (76) de l'organe de commande dans un état IDENTIFICATION (72).

2. Organe de commande selon la revendication 1, où la base de données (12) stocke en outre des plages horaires d'utilisation affectées à chaque utilisateur.

3. Organe de commande selon l'une quelconque des revendications précédentes, comprenant encore une mémoire (15) enregistrant cycliquement des événements afin de réaliser un journal de bord.

4. Organe de commande selon l'une quelconque des revendications précédentes, comprenant encore une horloge.

5. Organe de commande selon l'une quelconque des revendications précédentes, comprenant encore des moyens de signalisation visuels (18) tel que DEL (69) ou écran LCD (70), et/ou sonores (19), contrôlés par l'unité de commande (5).

6. Organe de commande selon l'une quelconque des revendications précédentes, comprenant encore au moins une liaison d'échange de données (67).

7. Organe de commande selon l'une quelconque des revendications précédentes, comprenant encore une mémoire non volatile (65) afin de conserver des informations entre deux mises sous tension parmi : le programme (6), le mode (9), la base de données (12), le journal de bord (15).

8. Procédé de configuration d'un organe de commande selon l'une quelconque des revendications précédentes, **caractérisé en ce que**, dans un état INITIALISATION (71) obtenu suite à une mise sous tension lorsqu'aucune donnée d'identification n'est stockée, sont réalisées les étapes suivantes :
- acquisition d'une donnée d'identification à partir du capteur d'empreinte digitale,
- stockage de ladite donnée d'identification comme donnée d'identification administrateur (25), un administrateur étant autorisé à réaliser des fonctions de configuration de l'organe de commande,
- passage (76) de l'organe de commande dans un état IDENTIFICATION (72).

9. Procédé selon la revendication 8, où dans l'état IDENTIFICATION (72) sont réalisées les étapes suivantes :
- acquisition d'une donnée d'identification à partir du capteur d'empreinte digitale,
- comparaison avec des données d'identification administrateur (25),
- si la comparaison est positive, passage (77) dans un état ENREGISTREMENT (73),
- sinon, comparaison avec des données d'identification utilisateur (27),
- autorisation d'un changement de position de sortie si la comparaison est positive,
- reprise à la première étape.

10. Procédé selon la revendication 9, où le changement de position de sortie n'est autorisé que si en outre, l'instant d'acquisition de la donnée d'identification est compris dans une plage horaire d'utilisation affectée à l'utilisateur identifié.

11. Procédé selon les revendications 9 ou 10, où dans l'état ENREGISTREMENT (73) sont réalisées les étapes suivantes :
- acquisition d'une donnée d'identification à partir du capteur d'empreinte digitale,
- comparaison avec les données d'identification administrateur (25),
- si la comparaison est positive, passage (78) dans l'état IDENTIFICATION,
- sinon comparaison avec des données d'identification effaceur (26),
- si la comparaison est positive, effacement de toutes les données d'identification utilisateur (27) de la base de données (12) à l'exclusion des données d'identifications administrateur (25) et effaceur (26),
- sinon, comparaison avec les données d'identification utilisateur (27),
- si la comparaison est négative, stockage de cette donnée d'identification comme donnée d'identification utilisateur (27),
- reprise à la première étape.

12. Procédé selon l'une quelconque des revendications 9 à 11, où une reconnaissance multiple d'une donnée d'identification administrateur selon un protocole temporel donné fait passer (79) dans un état SUPER ENREGISTREMENT (74), permettant d'ajouter une donnée d'identification administrateur (25) et/ou une donnée d'identification effaceur (26).

13. Procédé selon l'une quelconque des revendications 9 à 12 où une séquence donnée d'actions sur un sélecteur (8) déterminant le mode de l'organe de commande efface les données d'identification administrateur (25) et effaceur (26).

14. Procédé selon l'une quelconque des revendications 9 à 13 où depuis tout état, il est passé (81) automatiquement dans l'état IDENTIFICATION (72) après écoulement d'une temporisation.

15. Procédé selon l'une quelconque des revendications 9 à 14, où une combinaison donnée de reconnaissance de données d'identification administrateur (25) et/ou effaceur (26) selon une séquence temporelle donnée modifie le mode de l'organe de commande.

16. Procédé selon l'une quelconque des revendications 9 à 15, où l'état ou les changements d'état de l'organe de commande sont indiqués via les moyens de signalisation visuels (18) ou sonores (19).

## Patentansprüche

1. Steuerorgan, das geeignet ist, um in die industriellen Bedienpulte als Ersatz für ein Steuerorgan, das ein mechanisches Betätigungsmittel, wie zum Beispiel Druckknöpfe, Schalter, Wählschalter, Drehregler hat, installiert zu werden, das Folgendes umfasst:
- einen Fingerabdrucksensor, der als Betätigungsmittel (1) derart verwendet wird, dass das Erkennen eines Fingerabdrucks eine manuelle Betätigung ersetzt,
- eine Datenbank (12) zum Speichern der Identifikationsdaten,
- ein Relaismittel (3), über welches das Steuerorgan zwischen zwei Ausgangspositionen wechseln kann, und
- eine programmierbare Steuereinheit (5), die geeignet ist, um eine Identifikationsinformation eines Bedieners, die von dem Fingerabdrucksensor geliefert wird, mit Identifikationsdaten zu vergleichen, die in der Datenbank (12) des Steuerorgans gespeichert sind, um zu erkennen, ob der Bediener (4) zugelassen ist, wobei eine Änderung der Ausgangsposition nur zugelassen wird, wenn der Bediener (4) als zugelassen erkannt wird, **dadurch gekennzeichnet, dass**:
- das Steuerorgan ein Programm umfasst, das von der Steuereinheit ausgeführt werden kann, um eine Ausgangsposition des Steuerorgans in Abhängigkeit von einem Erkennen eines Fingerabdrucks gemäß einem Modus von zwei Hauptmodi: monostabil oder bistabil, zu bestimmen,
- das Steuerorgan einen Wählschalter (7) umfasst, der den Modus des Steuerorgans bestimmt, wobei der Wählschalter ein Wert (9) in einem Speicher ist, der von dem Programm gelesen werden kann, und
- das Steuerorgan geeignet ist, um die folgenden Schritte in einem Initialisierungszustand auszuführen, der im Anschluss an ein Anlegen von Spannung erhalten wird, wenn keine Identifikationsinformation gespeichert ist:
- Erfassen einer Identifikationsinformation ausgehend von dem Fingerabdrucksensor,
- Speichern der Identifikationsinformation als Administrator-Identifikationsinformation (25), wobei ein Administrator zum Ausführen der Konfigurationsfunktionen des Steuerorgans zugelassen ist, und
- Übergehen (76) des Steuerorgans auf einen IDENTIFIKATIONS-Zustand (72).

2. Steuerorgan nach Anspruch 1, in dessen Datenbank (12) außerdem die jedem Benutzer zugewiesenen Benutzungsstunden gespeichert werden.

3. Steuerorgan nach einem der vorstehenden Ansprüche, das noch einen Speicher (15) zur zyklischen Aufzeichnung der Ereignisse umfasst, um ein Logbuch zu erstellen.

4. Steuerorgan nach einem der vorstehenden Ansprüche, das noch eine Uhr umfasst.

5. Steuerorgan nach einem der vorstehenden Ansprüche, das noch visuelle Signalisierungsmittel (18) umfasst, wie DEL (69) oder LCD-Bildschirm (70), und/oder akustische (19), die über die Steuereinheit kontrolliert werden (5).

6. Steuerorgan nach einem der vorstehenden Ansprüche, das noch mindestens eine Datenaustauschverbindung (67) besitzt.

7. Steuerorgan nach einem der vorstehenden Ansprüche, das noch einen nichtflüchtigen Speicher (65) zur Aufbewahrung von Informationen zwischen zwei Einschaltvorgängen von Programm (6), Modus (9), Datenbank (12) und Logbuch (15) umfasst.

8. Verfahren zum Konfigurieren eines Steuerorgans nach einem der vorstehenden Ansprüche, **dadurch gekennzeichnet, dass** bei einem INITIALISIERUNGSZUSTAND (71), der nach einem Anlegen der Spannung ohne gespeicherte ID-Information erhalten wird, folgende Schritte ausgeführt werden:
- Akquisition einer ID-Information vom Fingerabdrucksensor,
- Speicherung dieser ID-Information als ID-Information eines Administrators (25, wobei ein Administrator dazu berechtigt ist Konfigurationsfunktionen des Steuerorgans auszuführen,
- Übergang (76) des Steuerorgans in einen IDENTIFIKATIONSZUSTAND (72).

9. Verfahren nach Anspruch 8, wobei im IDENTIFIKATIONSZUSTAND (72) folgende Schritte ausgeführt werden:
- Akquisition einer ID-Information vom Fingerabdrucksensor,
- Vergleich mit Administrator-ID-Daten (25),
- ist der Vergleich positiv, Übergang (77) in einen REGISTRIERUNGSZUSTAND (73),
- anderenfalls Vergleich mit Benutzer-ID-Daten (27),
- Genehmigung eines Wechsels der Ausgangsposition wenn der Vergleich positiv verläuft,
- Rückkehr zum ersten Schritt.

10. Verfahren nach Anspruch 9, wobei der Wechsel der Ausgangsposition nur dann genehmigt wird, wenn außerdem der Akquisitionsmoment der ID-Information innerhalb eines dem identifizierten Benutzer zugewiesenen Zeitraums liegt.

11. Verfahren nach den Ansprüchen 9 oder 10, wobei im REGISTRIERUNGSZUSTAND (73) folgende Schritte ausgeführt werden:
- Akquisition einer ID-Information vom Fingerabdrucksensor,
- Vergleich mit Administrator-ID-Daten (25),
- ist der Vergleich positiv, Übergang (78) in den IDENTIFIKATIONSZUSTAND,
- anderenfalls Vergleich mit den Löscher-ID-Daten (26),
- ist der Vergleich positiv, Löschen aller Benutzer-ID-Daten (27) aus den Datenbank (12) bis auf die Administrator-ID-Daten (25) und Löscher-ID-Daten (26),
- anderenfalls Vergleich mit Benutzer-ID-Daten (27),
- ist der Vergleich negativ, Speicherung dieser ID-Information als Benutzer-ID-Information (27),
- Rückkehr zum ersten Schritt.

12. Verfahren nach einem der vorstehenden Ansprüche 9 bis 11, wobei eine Mehrfacherkennung einer Administrator-ID-Information nach einem zeitlichen Protokoll den Übergang (79) in einen SUPERREGISTRIERUNGSZUSTAND (74) bewirkt, was das Hinzufügen einer Administrator-ID-Information (25) und/oder einer Löscher-ID-Information (26) ermöglicht.

13. Verfahren nach einem der vorstehenden Ansprüche 9 bis 12, wobei eine bestimmte Abfolge von Aktionen auf einer Auswahlvorrichtung (8) die den Modus des Steuerorgans festlegt, die Administrator-ID-Daten (25) und die Löscher-ID-Daten (26) löscht.

14. Verfahren nach einem der vorstehenden Ansprüche 9 bis 13, wobei nach Ablauf einer Verweilzeit ausgehend von jedem Zustand automatisch der Übergang (81) in den IDENTIFIKATIONSZUSTAND (72) erfolgt.

15. Verfahren nach einem der vorstehenden Ansprüche 9 bis 14, wobei eine bestimmte Kombination zur Erkennung von Administrator-ID-Daten (25) und/oder Löscher-ID-Daten (26) nach einer bestimmten zeitlichen Sequenz den Modus des Steuerorgans ändert.

16. Verfahren nach einem der vorstehenden Ansprüche 9 bis 15, wobei der Zustand oder die Zustandsänderungen des Steuerorgans über die visuellen (18) oder akustischen Signalisierungsmittel (19) angezeigt werden.

## Claims

1. Control member suitable for being mounted in industrial control consoles as a replacement for a control member having mechanical operating means such as push-buttons, switches, selectors, tuners, the control member comprising:
- a fingerprint sensor used as operating means (1), such that fingerprint recognition replaces a manual operation,
- a database (12) for storing identification data,
- relay means (3) via which the control member can change between two output positions, and
- a programmable control member (5) suitable for comparing an item of identification data of an operator, supplied by the fingerprint sensors, with identification data stored in the database (12) of said control member in order to recognise whether said operator (4) is authorised, a change of output position only being authorised if said operator (4) is recognised as being authorised,
**characterised in that**:
- the control member comprises a program executable by the control member in order to determine an output position of the control member on the basis of fingerprint recognition according to a mode from two main modes: monostable or bistable,
- the control member comprises a selector (7) determining the mode of the control member, the selector being a value (9) in a memory readable by said program, and
- the control member is suitable for carrying out the following steps in an initialisation state obtained following power-up when no identification data item is stored:
- acquisition of an identification data item using the fingerprint sensor,
- storage of said identification data item as administrator identification data (25) an administrator being authorised to carry out the control member configuration functions, and
- switching (76) of the control member into an IDENTIFICATION state (72).

2. A control member according to claim 1, wherein the database (12) also stores use time ranges assigned to each user.

3. A control member according to any of the preceding claims, also comprising a memory (15) storing events cyclically in order to produce a log.

4. A control member according to any of the preceding claims, also comprising a clock.

5. A control member according to any of the preceding claims, also comprising visual signalling means such as a LED (69) or LCD screen (70) and/or audible signalling means (19) controlled by the control member (5).

6. A control member according to any of the preceding claims, also comprising at least one data exchange link (67).

7. A control member according to any of the preceding claims, also comprising a non volatile memory (65) to store information when the control member is switched off, such as: the program (6), the mode (9), the database (12), the log (15).

8. A method of configuring a control member according to any of the preceding claims, **characterised in that**, in an INITIALISATION state (71) obtained after switching on when no identification data is stored, the following steps are carried out:
- acquisition of identification data from the fingerprint sensor,
- storage of said identification data as administrator identification data (25), an administrator being authorised to carry out functions for configuring the control member,
- transition (76) of the control member into an IDENTIFICATION state (72).

9. A method according to claim 8, wherein the following steps are carried out in IDENTIFICATION state (72):
- acquisition of identification data from the fingerprint sensor,
- comparison with administrator identification data (25),
- if the comparison is positive, transition (77) into a SAVE state (73),
- otherwise, comparison with user identification data (27),
- authorisation to change output position if the comparison is positive,
- return to the first step.

10. A method according to claim 9, wherein the change of output position is only authorised if, in addition, the identification data acquisition time lies within a use time range assigned to the user identified.

11. A method according to claim 8 or 9, wherein the following steps are carried out in SAVE state (73):
- acquisition of identification data from the fingerprint sensor,
- comparison with the administrator identification data (25),
- if the comparison is positive, transition (78) into IDENTIFICATION state,
- otherwise, comparison with eraser identification data (26),
- if the comparison is positive, all user data (27) is erased from the database (12) apart from the administrator (25) and eraser (26) identification data,
- otherwise, comparison with the user identification data (27),
- if the comparison is negative, this identification data is stored as user identification data (27),
- return to the first step.

12. A method according to any of claims 9 to 11, wherein multiple recognition of administrator identification data according to a given time protocol causes transition (79) into a SUPER SAVE state (74), in which administrator identification data (25) and/or eraser identification data (26) can be added.

13. A method according to any of claims 9 to 12, wherein a given sequence of actions on a selector (8) determining the control member mode erases the administrator (25) and eraser (26) identification data.

14. A method according to any of claims 9 to 13, wherein from any state, transition (81) to IDENTIFICATION state (72) occurs automatically after a timeout.

15. A method according to any of claims 9 to 14, wherein a given combination of administrator (25) and/or eraser (26) identification data according to a given time sequence changes the control member mode.

16. A method according to any of claims 9 to 15, wherein the control member state or state changes are indicated via the visual (18) or audible (19) signalling means.
